# EUROPÄISCHE PATENTSCHRIFT

(11) **EP 2 529 130 B1**
(45) Veröffentlichungstag und Bekanntmachung des Hinweises auf die Patenterteilung: **17.09.2014**
(21) Anmeldenummer: 11702932.2
(22) Anmeldetag: 25.01.2011
(51) Int. Cl.: F16D 57/04, F16D 33/20

(54) **HYDRODYNAMISCHE MASCHINE, INSBESONDERE HYDRODYNAMISCHER RETARDER**
HYDRODYNAMIC MACHINE, IN PARTICULAR A HYDRODYNAMIC RETARDER
MACHINE HYDRODYNAMIQUE, NOTAMMENT RALENTISSEUR HYDRODYNAMIQUE

(30) Priorität: 29.01.2010 DE 102010006332
(43) Veröffentlichungstag der Anmeldung: 05.12.2012
(73) Patentinhaber: Voith Patent GmbH, 89522 Heidenheim (DE)
(72) Erfinder: KAEMMERER, Steffen, 74564 Crailsheim (DE); SCHIPS, Rainer, 73479 Ellwangen (DE); HORLACHER, Bernd, 74423 Obersontheim (DE)
(74) Vertreter: Dr. Weitzel & Partner
(86) Internationale Anmeldenummer: PCT/EP2011/000304
(87) Internationale Veröffentlichungsnummer: WO 2011/091984

(56) Entgegenhaltungen:
- DE-A1- 2 239 562
- US-A- 2 889 013
- US-A- 3 547 235
- US-A- 5 147 181

## Beschreibung

Die vorliegende Erfindung betrifft eine hydrodynamische Maschine, insbesondere einen hydrodynamischen Retarder, im Einzelnen gemäß dem Oberbegriff von Anspruch 1.

Hydrodynamische Maschinen weisen zumindest zwei beschaufelte Räder, im Folgenden Schaufelräder, auf, die miteinander einen torusförmigen Arbeitsraum ausbilden. Man unterscheidet dabei zwischen solchen hydrodynamischen Maschinen, die zur Ausbildung des Arbeitsraumes genau zwei Schaufelräder aufweisen, nämlich hydrodynamische Kupplungen und hydrodynamische Retarder, und solchen hydrodynamische Maschinen, bei welchen zusätzlich feststehende oder festsetzbare Leitschaufelgitter im Arbeitsraum vorgesehen sind, sogenannte hydrodynamische Wandler. Die vorliegende Erfindung betrifft insbesondere die erstgenannten hydrodynamischen Maschinen mit genau zwei Schaufelrädern, und hierbei besonders hydrodynamische Retarder, bei welchen Antriebsleistung beziehungsweise Drehmoment von einem ersten umlaufenden Schaufelrad auf ein zweites feststehendes Schaufelrad oder von einem ersten umlaufenden Schaufelrad auf ein zweites entgegengesetzt zum ersten Schaufelrad umlaufendes Schaufelrad übertragen wird, um das erste Schaufelrad abzubremsen.

In Fahrzeugantriebssträngen, bei denen die vorliegende Erfindung anwendbar ist, sind solche hydrodynamische Maschinen, insbesondere hydrodynamische Retarder, weit verbreitet, welche zwei Schaufelräder mit Schaufeln, die ein ebenes Schaufelprofil aufweisen, sich in Axialrichtung gegenüberstehen, um den torusförmigen Arbeitsraum auszubilden. Die einander zugewandten freien axialen Enden der Schaufeln, auch als Schaufelvorderkante bezeichnet, sind in der Regel geradlinig und verlaufen in Radialrichtung des jeweiligen Schaufelrades. Um die Leistungsübertragung in einer Drehrichtung der hydrodynamischen Maschine zu verstärken, ist ferner vorgeschlagen, die Schaufelräder mit einer schrägen Beschaufelung zu versehen, derart, dass die Schaufeln in der genannten Drehrichtung spießend zueinander angeordnet sind. An dem Verlauf der Schaufelvorderkanten geradlinig in Radialrichtung des Schaufelrades ändert dies nichts. Ferner wurde bereits vorgeschlagen, die Schaufeln verwunden auszuführen, um das Schaufelrad im Gießverfahren einstückig drehentformbar herzustellen. Auch hierdurch wir der geradlinige Verlauf der Schaufelvorderkanten in Radialrichtung des Schaufelrades nicht berührt.

Ein ganz anders als zuvor beschrieben gestaltetes Schaufelprofil beschreibt das US-Patent US 5 147 181. Hier erstrecken sich die Schaufeln in einem Bogen von einer radial inneren Wandung des torusförmigen Arbeitsraumes zu einer radial äußeren Wandung des Arbeitsraumes. Gemäß dieser Patentschrift ist es dabei für die Strömungsführung der hydrodynamischen Kreislaufströmung im Arbeitsraum entscheidend, dass der Bogen eine ganz bestimmte Parabelform aufweist.

Die Offenlegungsschrift DE 2 239 562 A beschreibt eine hydrodynamische Bremse mit ähnlichen bogenförmigen Schaufeln, die in einer Draufsicht schräg auf die Ebene des Trennspaltes zwischen den beiden Schaufelrädern kreisförmige Schnittlinien zwischen den Innenflächen der Schaufeln und der Innenfläche der Kreislaufschale aufweisen. In einer Ansicht in Richtung der Drehachse auf das Schaufelrad weist der Bogen der Schaufeln die Form einer Ellipse auf.

Das Dokument US 2 126 751 A beschreibt einerseits geneigt zur Radialrichtung verlaufende lineare Schaufelvorderkanten und andererseits Schaufelvorderkanten, die in einer Draufsicht auf die Trennspalteebene eine leichte bogenförmige Form aufweisen. Entsprechende Schaufelformen zeigt auch das Dokument GB 663 463 A. Das US-Patent US 2 889 013 A schlägt vor, becherförmige Schaufeln in Form von Hohlkugelsegmenten vorzusehen.

Obwohl somit hydrodynamische Maschinen mit verschiedensten Schaufelprofilen bekannt sind, besteht ein fortwährender Bedarf, ein Optimum hinsichtlich des Wirkungsgrades bei gleichzeitig günstigen Herstellungskosten und hoher Zuverlässigkeit zu erreichen. Ein weiteres wichtiges Merkmal ist der Verlauf des Wirkungsgrades über verschiedenen Drehzahlen beziehungsweise bei verschiedenen Füllungsgraden (Füllungszuständen im Betrieb zwischen einer Vollfüllung und einer Mindestfüllung) des Arbeitsraumes.

Der vorliegenden Erfindung liegt die Aufgabe zugrunde, eine hydrodynamische Maschine, insbesondere einen hydrodynamischen Retarder anzugeben, der die genannten Anforderungen noch besser als bisher bekannte Ausführungsformen erfüllt. Insbesondere soll ein hoher Wirkungsgrad bei einer möglichen kostengünstigen Herstellung der hydrodynamischen Maschine beziehungsweise des hydrodynamischen Retarders erreicht werden, vorteilhaft mit einem günstigen Wirkungsgradverlauf bei verschiedenen Drehzahlen und verschiedenen Füllungszuständen des Arbeitsraumes.

Die erfindungsgemäße Aufgabe wird durch eine hydrodynamische Maschine, insbesondere einen hydrodynamischen Retarder, die/der vorteilhaft genau zwei Schaufelräder aufweist, mit den Merkmalen von Anspruch 1 gelöst. In den abhängigen Ansprüchen sind vorteilhafte und besonders zweckmäßige Ausgestaltungen der Erfindung angegeben.

Die erfindungsgemäße hydrodynamische Maschine, die insbesondere als hydrodynamischer Retarder ausgeführt ist, weist mindestens zwei Schaufelräder auf, die sich einander derart gegenüberstehend angeordnet sind, dass sie miteinander einen torusförmigen Arbeitsraum ausbilden, in dem die Schaufeln der Schaufelräder positioniert sind. Der Arbeitsraum ist mit einem Arbeitsmedium befüllbar oder gemäß einer Ausführungsform auch ständig befüllt - wenn nämlich der Antrieb der hydrodynamischen Maschine zur Stillsetzung des ersten Schaufelrads abgeschaltet werden kann -, um Drehmoment mittels einer Kreislaufströmung des Arbeitsmediums im Arbeitsmediumraum hydrodynamisch vom ersten Schaufelrad auf das zweite Schaufelrad zu übertragen. Wie der Fachmann weiß, wird das Arbeitsmedium durch die Schaufeln des ersten Schaufelrades im Arbeitsraum radial nach außen beschleunigt, tritt in das gegenüberstehende zweite Schaufelrad ein, wird dort radial nach innen verzögert und tritt radial innen wieder in das erste Schaufelrad ein. Durch diese Kreislaufübertragung erfolgt die gewünschte Drehmoment- beziehungsweise Antriebsleistungsübertragung.

Bei manchen hydrodynamischen Maschinen, insbesondere bei Ausführung als hydrodynamischer Wandler können die Schaufeln auch abweichend der zuvor beschriebenen Anordnung im Arbeitsraum positioniert sein, sodass der Eintritt beziehungsweise der Austritt der Kreislaufströmung in die/aus den Schaufeln des ersten Schaufelrades beziehungsweise des zweiten Schaufelrades auf einem anderen Durchmesser liegen können.

Erfindungsgemäß läuft zumindest das erste Schaufelrad um eine Drehachse um. Bei Ausführungsform als hydrodynamische Kupplung oder als hydrodynamischer Wandler läuft das zweite Schaufelrad um dieselbe Drehachse in dieselbe Drehrichtung um, wie das erste Schaufelrad. Bei Ausführungsform als hydrodynamischer Retarder ist das zweite Schaufelrad stationär oder wird entgegen der Drehrichtung des ersten Schaufelrades um dieselbe Drehachse von außen angetrieben, um einen Gegenlaufretarder auszubilden.

Die Schaufeln jedes Schaufelrades erstrecken sich entsprechend der eingangs genannten US 5 147 181 in einem Bogen von einem radial inneren Schaufelende an einer radial inneren Wandung des Arbeitsraumes zu einem radial äußeren Schaufelende an einer radial äußeren Wandung des Arbeitsraumes.

Erfindungsgemäß weist nun der Bogen, in welchem sich die Schaufeln von ihrem radial inneren Schaufelende zu ihrem radial äußeren Schaufelende erstrecken, in einer Draufsicht in Richtung der Drehachse auf jedes Schaufelrad eine Kreisbogenform auf. Diese Kreisbogenform ergibt sich somit zumindest vom Trennspalt aus auf jedes Schaufelrad gesehen.

Vorteilhaft sind das radial innere Schaufelende und das radial äußere Schaufelende einer Schaufel auf einer (theoretischen) Geraden positioniert, die senkrecht auf der Drehachse steht und somit durch den Mittelpunkt des Schaufelrades verläuft.

Erfindungsgemäß stehen die Schaufeln senkrecht auf einer Ebene, die durch den Trennspalt zwischen den beiden Schaufelrädern verläuft, und erstrecken sich in Richtung der Drehachse, welche senkrecht auf der genannten Ebene durch den Trennspalt steht. Vorteilhaft ist die Form des Bogens, in welchem sich die Schaufeln von ihrem radial inneren Schaufelende zu ihrem radial äußeren Schaufelende erstrecken, und/oder der Schaufelquerschnitt in jedem Axialschnitt bezogen auf die Drehachse der hydrodynamischen Maschine durch die Schaufeln im Wesentlichen oder vollständig identisch, wenn die Axialschnitte in Richtung der Drehachse hintereinander und in parallelen Ebenen gezogen sind. Man könnte die Schaufeln demnach auch als senkrecht auf dem Trennspalt stehende Zylindersegmente beschreiben.

Da die Schaufeln eine gewisse Schaufeldicke aufweisen, kann die Definition des Bogens, über welchen sich die Schaufeln von ihrem radial inneren Schaufelende bis zu ihrem radial äußeren Schaufelende erstrecken, auf verschiedene Arten gewählt werden. Gemäß einer ersten hier angenommenen Definition wird der Bogen durch die Schaufelmittellinie gebildet. Die Schaufelmittellinie ist eine theoretische Linie, die auf jedem ihrer Punkte einen identischen Abstand zu den beiden beidseits der Schaufelmittellinie verlaufenden, entgegengesetzt zueinander angeordneten Schaufeloberflächen aufweist, bezogen auf den Radius der Schaufelmittellinie. In anderen Worten wird die Schaufelmittellinie durch jeden Mittelpunkt zwischen zwei sich gegenüberstehenden Tangenten an den einander abgewandten Oberflächen der Schaufeln gebildet.

Eine andere mögliche Definition bezieht den Bogen auf eine der beiden Schaufeloberflächen.

Die beiden genannten Definitionen sind hinsichtlich des bogenförmigen Verlaufes der Schaufeln identisch, wenn die Schaufeln eine konstante Schaufeldicke über dem Radius des Schaufelrades aufweisen. Vorzuziehen ist es jedoch, dass sich die Schaufeln, insbesondere ausgehend vom Bereich ihres Scheitels, das heißt ihres Mittelpunktes auf einer ihrer Schaufeloberflächen, zum radial inneren und zum radial äußeren Schaufelende in ihrem Querschnitt verjüngen.

Die Schaufelvorderkanten der Schaufeln beider Schaufelräder, die einander gegenüberstehen, das heißt die einander in Richtung der Drehachse zugewandten freien axialen Enden der Schaufeln, weisen vorteilhaft eine konvexe Bogenform auf, in einem Axialschnitt entlang der Drehachse gesehen. Selbstverständlich sind auch andere Bogenformen, beispielsweise ein S-Bogen oder ein konkaver Bogen möglich.

Gemäß einer Ausführungsform weisen die Schaufeln des ersten Schaufelrades und die Schaufeln des zweiten Schaufelrades ein zueinander identisches Profil auf, wobei sich jedoch die Anzahl der Schaufeln je Schaufelrad voneinander unterscheiden kann. Ferner ist es gemäß einer ersten Alternative möglich, dass alle Schaufeln ein- und desselben Schaufelrades ein zueinander identisches Schaufelprofil aufweisen. Gemäß einer zweiten Alternative weisen zwar die Schaufeln ein- und desselben Schaufelrades zueinander verschiedene Profile auf, diese verschiedenen Profile finden sich dann aber bei der beschriebenen vorteilhaften Ausführungsform auch im anderen Schaufelrad wieder.

Die Erfindung soll nachfolgend anhand der Figuren und einer möglichen Ausführungsform exemplarisch beschrieben werden.

Es zeigen:
- Figur 1: einen schematischen Axialschnitt durch einen hydrodynamischen Retarder;
- Figur 2: eine Draufsicht in Richtung der Drehachse auf ein Schaufelrad des Retarders gemäß der Figur 1;
- Figur 3: die Bogenform der Schaufeln aus der Draufsicht gemäß der Figur 2 in einer vergrößerten Darstellung;
- Figur 4: eine vergrößerte schematische Darstellung in einem Axialschnitt durch den torusförmigen Arbeitsraum mit dem Verlauf der vorderen freien Schaufelenden (Schaufelvorderkante).

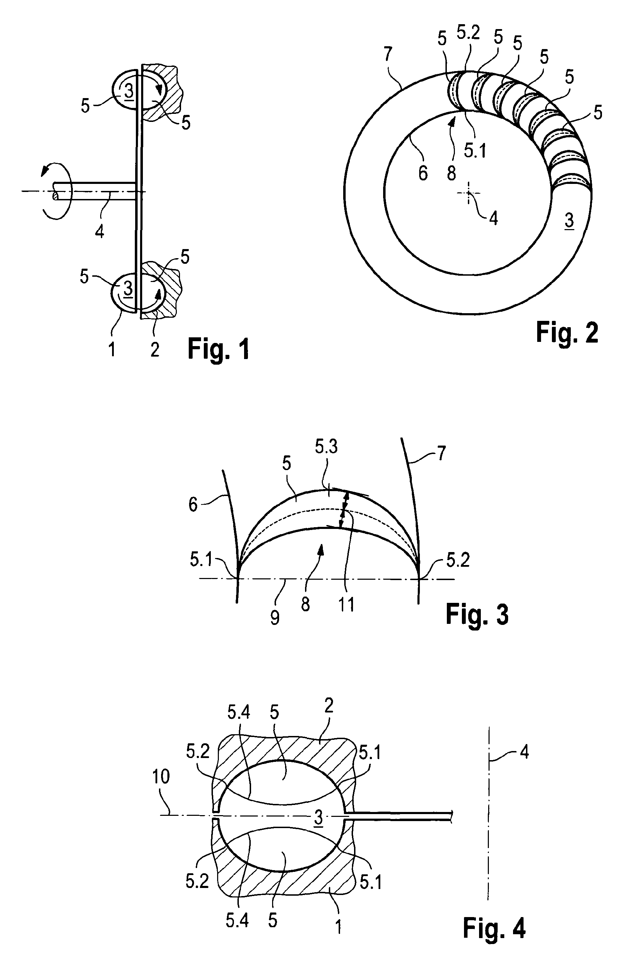

In der Figur 1 erkennt man in der schematischen Darstellung einen hydrodynamischen Retarder mit einem umlaufenden ersten Schaufelrad 1 und einem stationären zweiten Schaufelrad 2. Die beiden Schaufelräder 1, 2 bilden zusammen den torusförmigen Arbeitsraum 3 aus, in dem die Schaufeln 5 jeweils des ersten Schaufelrades 1 und des zweiten Schaufelrades 2 positioniert sind.

Das Schaufelrad 1 dreht sich über der Drehachse 4, wodurch das Arbeitsmedium radial nach außen beschleunigt wird und eine Kreislaufströmung im Arbeitsraum 3 ausbildet, siehe die Pfeile im Arbeitsraum 3.

Wie man in der Figur 2 erkennen kann, weisen die Schaufeln 5 in einer Draufsicht in Richtung der Drehachse 4 die Form eines Bogens 8 auf, der von einer radial inneren Wandung 6 des Arbeitsraumes 3 zu einer radial äußeren Wandung 7 des Arbeitsraumes 3 verläuft. Dabei liegt das radial innere Schaufelende 5.1 an der radial inneren Wandung 6 an, und das radial äußere Schaufelende 5.2 liegt an der äußeren Wandung 7 an.

Wie in der Figur 3 nochmals in vergrößerter Darstellung gezeigt ist, bildet der Bogen 8 eine Kreisbogenform. Aufgrund dessen, dass vorliegend sich der Querschnitt der Schaufel 5 ausgehend vom Bereich ihres Scheitels 5.3 zum radial inneren Schaufelende 5.1 und radial äußeren Schaufelende 5.2 verjüngt, wird der Bogen 8 in seiner Kreisbogenform exakt durch die Schaufelmittellinie 11 gebildet. Die Schaufelmittellinie 11 weist überall einen identischen Abstand zu den jeweils beidseitig von ihr angeordneten Schaufeloberflächen beziehungsweise zu Tangenten, die an diesen Oberflächen verlaufen, auf, wobei die Strecke des kürzesten Abstandes senkrecht auf diesen Tangenten steht, siehe die eingezeichneten Pfeile.

Das radial innere Schaufelende 5.1 und das radial äußere Schaufelende 5.2 sind auf einer Geraden 9 positioniert, die senkrecht auf der Drehachse 4 (in der Figur 3 nicht eingezeichnet) steht.

Wie in der Figur 4 gezeigt ist, weisen die einander in Axialrichtung des hydrodynamischen Retarders zugewandten freien axialen Enden 5.4 der Schaufeln 5 eine konvexe Bogenform auf, in einem Axialschnitt entlang der Drehachse 4 gesehen, wie er in der Figur 4 dargestellt ist.

In der Figur 4 ist ferner die Ebene 10 gezeigt, die durch den Trennspalt zwischen den beiden Schaufelrädern 1, 2 verläuft, und auf welcher die Schaufeln 5 insbesondere senkrecht stehen, zumindest im Bereich ihres freien axialen Endes oder über ihrer gesamten axialen Erstreckung.

Obwohl bei der gezeigten Ausführungsform sich der Kreisbogen 8 einer jeden Schaufel 5 über 180° erstreckt kommen generell auch größere oder kleinere Bogenlängen in Betracht, insbesondere in einem Bereich zwischen 120° bis <180° oder > 180° bis 195°.

## Patentansprüche

1. Hydrodynamische Maschine, insbesondere hydrodynamischer Retarder, mit zwei Schaufelrädern (1, 2), die sich einander derart gegenüberstehen, dass sie miteinander einen torusförmigen Arbeitsraum (3) ausbilden, der mit einem Arbeitsmedium befüllbar ist, um Drehmoment mittels einer Kreislaufströmung des Arbeitsmediums im Arbeitsraum (3) hydrodynamisch vom ersten Schaufelrad (1) auf das zweite Schaufelrad (2) zu übertragen; wobei
1.1 das erste Schaufelrad (1) um eine Drehachse (4) umläuft, und das zweite Schaufelrad (2) um dieselbe Drehachse (4) in derselben Drehrichtung oder entgegen der Drehrichtung des ersten Schaufelrades (1) umläuft oder stationär gehalten ist; und
1.2 sich die Schaufeln (5) jedes Schaufelrades (1, 2) in einem Bogen (8) von einem radial inneren Schaufelende (5.1) an einer radial inneren Wandung (6) des Arbeitsraumes (3) zu einem radial äußeren Schaufelende (5.2) an einer radial äußeren Wandung (7) des Arbeitsraumes (3) erstrecken; **dadurch gekennzeichnet, dass**
1.3 die Schaufeln (5) senkrecht auf einer Ebene (10) stehen, die einen Trennspalt zwischen den beiden Schaufelrädern (1, 2) ausbildet und auf welcher die Drehachse (4) senkrecht steht, und sich in Richtung der Drehachse (4) erstrecken, und
1.4 der Bogen (8) in einer Draufsicht in Richtung der Drehachse (4) auf jedes Schaufelrad (1, 2) eine Kreisbogenform aufweist.

2. Hydrodynamische Maschine gemäß Anspruch 1, **dadurch gekennzeichnet, dass** das radial innere Schaufelende (5.1) und das radial äußere Schaufelende (5.2) ein- und derselben Schaufel (5) auf einer Geraden (9) positioniert sind, die senkrecht auf der Drehachse (4) steht.

3. Hydrodynamische Maschine gemäß einem der Ansprüche 1 oder 2, **dadurch gekennzeichnet, dass** der Bogen (8) durch eine Schaufelmittellinie (11) gebildet wird, welche durch jeden Mittelpunkt zwischen zwei sich gegenüberstehenden Tangenten an einander abgewandten Oberflächen einer Schaufel (8) verläuft, und die Schaufeln (5) sich insbesondere ausgehend vom Bereich ihres Scheitels (5.3) zum radial inneren und radial äußeren Schaufelende (5.1, 5.2) in ihrem Querschnitt verjüngen.

4. Hydrodynamische Maschine gemäß einem der Ansprüche 1 bis 3, **dadurch gekennzeichnet, dass** die einander in Richtung der Drehachse (4) zugewandten freien axialen Enden (5.4) der Schaufeln (5) der beiden Schaufelräder (1, 2) eine konvexe Bogenform aufweisen, in einem Axialschnitt entlang der Drehachse (4) gesehen.

5. Hydrodynamische Maschine gemäß einem der Ansprüche 1 bis 4, **dadurch gekennzeichnet, dass** die Schaufeln (5) des ersten Schaufelrades (1) und die Schaufeln (5) des zweiten Schaufelrades (2) ein zueinander identisches Profil aufweisen.

## Claims

1. A hydrodynamic machine, especially a hydrodynamic retarder, comprising two blade wheels (1, 2) which are opposite of one another in such a way that they jointly form a toroidal working chamber (3) which can be filled with a working medium in order to hydrodynamically transfer torque by means of a cycle flow of the working medium in the working chamber (3) from the first blade wheel (1) to the second blade wheel (2), wherein
1.1 the first blade wheel (1) rotates about a rotational axis (4) and the second blade wheel (2) rotates about the same rotational axis (4) in the same direction of rotation or opposite of the direction of rotation of the first blade wheel (1), or is held in a stationary manner, and
1.2 the blades (5) of each blade wheel (1, 2) extend in an arc (8) from a radially inner blade end (5.1) on a radially inner wall (6) of the working chamber (3) to a radially outer blade end (5.2) on a radially outer wall (7) of the working chamber (3), **characterized in that**
1.3 the blades (5) are disposed perpendicularly to a plane (10) which forms a separating gap between the two blade wheels (1,2) and on which the rotational axis (4) stands perpendicularly, and extend in the direction of the rotational axis (4), and
1.4 the arc (8) has the shape of a circular arc in a top view of each blade wheel (1, 2) in the direction of the rotational axis (4).

2. A hydrodynamic machine according to claim 1, **characterized in that** the radially inner blade end (5.1) and the radially outer blade end (5.2) of one and the same blade (5) are positioned on a straight line (9) which stands perpendicularly to the rotational axis (4).

3. A hydrodynamic machine according to one of the claims 1 or 2, **characterized in that** the arc (8) is formed by a central line (11) of the blade which extends through each central point between two opposite tangents on surfaces of a blade (8) facing away from one another, and the blades (5) taper in their cross section especially starting from the region of their apex (5.3) to the radially inner and radially outer blade end (5.1, 5.2).

4. A hydrodynamic machine according to one of the claims 1 to 3, **characterized in that** the free axial ends (5.4) of the blades (5) of the two blade wheels (1, 2), which free axial ends face one another in the direction of the rotational axis (4), have a convex arc shape, as seen in an axial sectional view along the rotational axis (4).

5. A hydrodynamic machine according to one of the claims 1 to 4, **characterized in that** the blades (5) of the first blade wheel (1) and the blades (5) of the second blade wheel (2) have a profile which is identical with respect to each other.

## Revendications

1. Machine hydrodynamique, en particulier retardateur hydrodynamique, possédant deux roues à aubes (1, 2), opposées l'une à l'autre de telle sorte qu'elles constituent ensemble une chambre de travail (3) en forme de tore, qui peut se remplir d'un fluide de travail, pour transmettre le couple de rotation de la première roue à aubes (1) à la seconde roue à aubes (2) par un écoulement circulaire du fluide de travail dans la chambre de travail (3);
où
1.1 la première roue à aubes (1) tourne autour d'un axe de rotation (4), et la seconde roue à aubes (2) tourne autour du même axe de rotation (4) dans le même sens de rotation ou bien à l'encontre du sens de rotation de la première roue à aubes (1) ou bien est maintenue stationnaire ; et
1.2 les aubes (5) de chaque roue à aubes (1, 2) s'étendent dans un arc (8) allant d'une extrémité d'aubes (5.1) radialement interne au niveau d'une paroi radialement interne (6) de la chambre de travail (3) à une extrémité d'aubes (5.2) radialement externe au niveau d'une paroi radialement externe (7) de la chambre de travail (3) ;
caractérisée en ce
1.3 les aubes (5) sont disposées perpendiculairement sur un plan (10), qui constitue une fente de séparation entre les deux roues à aubes (1, 2) et sur laquelle l'axe de rotation (5) est perpendiculaire, lesquelles aubes s'étendent dans le sens de l'axe de rotation (4), et
1.4 l'arc (8) présente une forme d'arc circulaire dans une vue de dessus dans le sens de l'axe de rotation (4) sur chaque roue à aubes (1, 2).

2. Machine hydrodynamique selon la revendication 1, **caractérisée en ce que** l'extrémité d'aubes (5.1) radialement interne et l'extrémité d'aubes (5.2) radialement externe d'une seule et même aube (5) sont positionnées sur une droite disposée perpendiculaire sur l'axe de rotation (4).

3. Machine hydrodynamique selon l'une des revendications 1 ou 2, **caractérisée en ce que** l'arc (8) est constitué d'une ligne médiane d'aube (11), qui traverse chaque centre entre deux tangentes opposées au niveau de surfaces d'une aube (8) se tournant le dos, et la section transversale des aubes (5) va rétrécissant en particulier depuis la zone du sommet (5.3) vers l'extrémité d'aubes radialement interne et l'extrémité radialement externe (5.1, 5.2).

4. Machine hydrodynamique conformément à l'une des revendications 1 à 3, **caractérisée en ce que** les extrémités (5.4) libres axiales des aubes (5) des deux roues à aubes (1,2), extrémités tournées l'une vers l'autre dans le sens de l'axe de rotation (4), présentent une forme d'arc convexe, vue en coupe axiale le long de l'axe de rotation (4).

5. Machine hydrodynamique conformément à l'une des revendications 1 à 4, **caractérisée en ce que** les aubes (5) de la première roue à aubes (1) et les aubes (5) de la seconde roue à aubes (2) sont de profil identique.
